# EUROPÄISCHE PATENTANMELDUNG

(11) **EP 2 309 303 A1**
(43) Veröffentlichungstag der Anmeldung: **13.04.2011**
(21) Anmeldenummer: 09172213.2
(22) Anmeldetag: 05.10.2009
(51) Int. Cl.: G02B 21/06, G02B 21/24

(54) **Mikroskop**

(71) Anmelder: Photonic Optische Geräte Ges.m.b.H. & Co.KG, 1160 Wien (AT)
(72) Erfinder: Feger, Dieter, 1140 Wien (AT)
(74) Vertreter: Stocker, Kurt

(57) **Zusammenfassung**

Mikroskop mit einer Mikroskopbasis (4), einer Mikroskopsäule (5), einem an der Mikroskopsäule (5) in unterschiedlicher Höhe über der Mikroskopbasis (4) positionierbarem Tragearm (3) für ein optisches od. optronisches Beobachtungssystem (1) und mit einer am Mikroskop angeordneten elektrischen Beleuchtungseinrichtung für ein Objekt. Der Tragearm (3) für das Beobachtungssystem (1) weist mindestens einen durch lichtdichte Wandungen gebildeten Hohlraum (6, 6a, 6b, 6c) auf, der zwischen dem Beobachtungssystem (1) und der Mikroskopsäule (5) und/oder an der vom Beobachtungssystem (1) abgewandten Seite hinter der Mikroskopsäule (5) und/oder seitlich der Mikroskopsäule (5) angeordnet ist. In diesem mindesten einen Hohlraum (6, 6a, 6b, 6c) sind elektrische und/oder elektronische Bauteile (12) und/oder lichtemittierende Bauteile (7, 7a, 7b) der Beleuchtungseinrichtung eingebaut. Am Tragearm (3) für das Beobachtungssystem (1) ist ein mechanisches Steck- und Haltesystem (8, 18, 23, 24) für den elektrischen Anschluss mindestens einer außerhalb des Trägers anordbaren und auf das zu beobachtende Objekt richtbaren Lichtquelle (19), wie mindestens eine Leuchtdiode und/oder für mindestens einen, vorzugsweise flexiblen zum Objekt ausrichtbaren Lichtleiter (9), dessen Lichteintrittsfläche über das mechanische Steck- und Haltesystem (8, 18, 23, 24) auf mindestens eine innerhalb des Hohlraums (6,6a,6b,6c) angeordnete Leuchtdiode (7,7a,7b) ausgerichtet.

## Beschreibung

Die Erfindung betrifft ein Mikroskop mit einer Mikroskopbasis, einer Mikroskopsäule, einem an der Mikroskopsäule in unterschiedlicher Höhe über der Mikroskopbasis positionierbarem Tragearm für ein optisches od. optronisches Beobachtungssystem und mit einer am Mikroskop angeordneten elektrischen Beleuchtungseinrichtung für ein Objekt.

Zur Beleuchtung kann in bekannter Weise Licht von einer vom Mikroskop separiert am Arbeitsplatz aufgestellten elektrischen Lichtquelle mittels eines oder mehrerer Lichtleiter an das zu beobachtende Objekt geführt werden. Das Austrittsfenster des Lichtleiters kann direkt auf das Objekt ausgerichtet sein oder an ein um das Objektiv des optischen Beobachtungssystems angeordnetes faseroptisches Ringlicht angeschlossen sein.

Derartige bekannte Beleuchtungssysteme haben den Vorteil, dass unterschiedlichste Variationen der Objektbeleuchtung durchführbar sind, weisen aber den großen Nachteil auf, dass die separierte Lichtquelle am Arbeitstisch viel Platz in Anspruch nimmt und deren Aufstellungsort am Arbeitstisch nahe des Mikroskops erfolgen muss, da längere Lichtleiter sehr teuer sind. Hierbei muss auch auf die eingeschränkte mechanische Flexibilität der Lichtleiter Rücksicht genommen werden, sodass die freie Wahl des Aufstellungsortes für die separierte Lichtquelle in nachteiliger Weise nicht gegeben ist.

Weiters wurde mit der DE 102005036230 bereits vorgeschlagen, eine Leuchtdioden aufweisende Beleuchtungseinrichtung mit dem Mikroskop baulich zu kombinieren, wodurch die Nachteile der getrennt aufzustellenden separierten Lichtquelle vermieden werden. Leuchtdioden sind im Vergleich mit Halogenglühlampen sehr klein, und auch der Strombedarf von Hochleistungs-Leuchtdioden ist wesentlich geringer als der von Glühlampen, und somit kann eine Kombination der Beleuchtungseinrichtung mit einem Mikroskop vorgenommen werden, ohne die Form und das Volumen bzw. auch ohne das Gewicht des Mikroskops wesentlich zu vergrößern. Dieser bekannte Vorschlag sieht vor, am Fokusarm, d.h. am Tragearm für das optische Beobachtungssystem des Mikroskops mehrere Leuchtdioden um die Mikroskopaufnahme herum und weitere Leuchtdioden entlang des Fokusarms anzuordnen. Diese Leuchtdioden sind zur Auflichtbeleuchtung des zu untersuchenden Objekts vorgesehen in ihrer direkten Strahlrichtung zum Objekt in fest vorgegebener Richtung fixiert. Somit kann der Laborant in nachteiliger Weise keinerlei Variation der Objektbeleuchtung vornehmen, obwohl dies für vielerlei Untersuchungen erforderlich ist.

Weiters wurde mit der US 2004/263960 A1 auch vorgeschlagen, am Tragearm für das optische Beobachtungssystem, zwischen dem Objektiv und der Mikroskopsäule, einen mehrere Leuchtdioden aufweisenden Lichtstrahler anzuordnen, der geneigt zur optischen Achse des Beobachtungssystems direkt auf das zu untersuchende Objekt ausgerichtet ist. Eine Änderung der Strahlungsrichtung ist in nachteiliger Weise nur in einem sehr eingeschränkten Bereich um eine Achse möglich. Die Energieversorgung der Leuchtdioden erfolgt über ein elektrisches Kabel von einer Stromversorgungseinrichtung, die in der Bodenplatte des Mikroskops angeordnet ist. Hierbei ist auch von Nachteil, dass das Kabel durch die Mikroskopsäule geführt ist, was den Montageaufwand für das Gerät erhöht und bei Verschiebung des optischen Systems zum Verschleiß bzw. zu Beschädigung des Kabels führt.

Aus der US 5 920 425 A ist ein Video-Mikroskop-System bekannt, das auch als Video-Präsentationssystem ausgebildet sein kann. Zur Objektbeleuchtung ist eine Beleuchtungseinrichtung in eine Kopf-Einheit eingebaut, in die auch die Videokamera eingebaut ist. Es wird auch vorgeschlagen, die Beleuchtungseinrichtung an das Video-Mikroskop-System anzubauen.

Die US 3 971 621 A beschreibt ein Mikroskop, bei dem ein Lichtleiter zur Objektbeleuchtung vorgesehen ist. Dieser Lichtleiter ist an eine Lichtquelle gekoppelt, die außen am Mikroskopständer angebracht ist. Der Lichtleiter ist von unten an das zu untersuchende Objekt geführt.

Die EP 1 469 333 A1 zeigt ein Mikroskop, das mit zwei Lichtleitern ausgerüstet ist, die in Richtung zum zu untersuchenden Objekt positioniert sind.

Der Erfindung liegt daher die Aufgabe zu Grunde, eine Beleuchtungseinrichtung mit einem Mikroskop derart zu kombinieren und eine bauliche Einheit zu schaffen, die einerseits alle Nachteile der bekannten Konstruktionen vermeidet und andererseits vorteilhaft alle Variationen der Objektbeleuchtung ermöglicht, wie sie mit separierten Lichtquellen durchführbar sind.

Gemäß der Erfindung wird daher bei einem Mikroskop der eingangs erwähnten Art vorgeschlagen , dass der Tragearm für das Beobachtungssystem mindestens einen durch lichtdichte Wandungen gebildeten Hohlraum aufweist, der zwischen dem Beobachtungssystem und der Mikroskopsäule und/oder an der vom Beobachtungssystem abgewandten Seite hinter der Mikroskopsäule und/oder seitlich der Mikroskopsäule angeordnet ist und in diesem mindesten einen Hohlraum elektrische und/oder elektronische Bauteile und/ oder lichtemittierende Bauteile der Beleuchtungseinrichtung eingebaut sind, wobei an dem Tragearm für das Beobachtungssystem ein mechanisches Steck- und Haltesystem für den elektrischen Anschluss mindestens einer außerhalb des Tragearms anordbaren und auf das zu beobachtende Objekt richtbaren Lichtquelle, wie mindestens eine Leuchtdiode und/oder für mindestens einen, vorzugsweise flexiblen, zum Objekt ausrichtbaren Lichtleiter, dessen Lichteintrittsfläche über das mechanische Steck- und Haltesystem auf mindestens eine innerhalb des Hohlraums angeordnete Leuchtdiode ausgerichtet ist.

Diese erfindungsgemäße Konstruktion ermöglicht die Integration zumindest aller wesentlichen Komponenten einer elektrischen Lichtquelle für die Auflichtbeleuchtung des zu untersuchenden Objekts im Mikroskop, wobei in vorteilhafter Weise, wie bei einer separierten, entfernt vom Mikroskop angeordneten Lichtquelle, durch den Anschluss von einem od. mehreren Lichtleitern, externen Leuchtdioden-Strahlern, von einem faseroptischen Ringlicht oder von einem Leuchtdioden-Ringlicht unterschiedlichste erforderliche Beleuchtungs-Varianten durchführbar sind, ohne dass lange, teure Lichtleiter verwendet werden müssen, die gegebenenfalls auch den Freiraum um das Mikroskop nachteilig einschränken. Durch die erfindungsgemäße Ausgestaltung des Mikroskops mit der im Tragearm integrierten Beleuchtungseinrichtung wird ein kompaktes Mikroskop-System geschaffen, dass einfach in Betrieb nehmbar und einfach transportierbar ist.

Nach einem weiteren Merkmal der Erfindung wird vorgeschlagen, dass die im Hohlraum des Tragearms angeordneten elektrischen und/oder elektronischen und/oder lichtemittierenden Bauteile der Beleuchtungseinrichtung als vorzugsweise einstückig ausgebildetes Modul ausgebildet sind, das, vorzugsweise, über eine verschließbare Öffnung im Träger, insbesondere über einen schwenkbaren Deckel oder eine verschiebbare Klappe, austauschbar ausgebildet ist. Hierdurch kann in einfacher und kostengünstiger Weise die Beleuchtungseinrichtung ausgetauscht werden, um beispielsweise die Parameter des Lichts, wie Farbtemperatur, Lichtstärke, etc. an die durchzuführende Untersuchung anzupassen. Aber auch im Falle eines Defekts der Beleuchtungseinrichtung ist in einfachster Weise ein Austausch möglich, was insbesondere bei Objektuntersuchungen während eines medizinischen Verfahrens von wesentlicher Bedeutung ist.

In weiterer Ausgestaltung der Erfindung wird vorgeschlagen, dass der mindestens eine Hohlraum durch ein am Tragearm für das Beobachtungssystem befestigtes Gehäuse gebildet ist. Hierdurch ist es möglich, auch sehr große Komponenten der Beleuchtungseinrichtung mit dem Tragearm für das Beobachtungssystem zu integrieren, beispielsweise einen Kühlkörper für ein Leuchtdioden-Array von Höchstleistungs-Leuchtdioden, einen großvolumigen Netztransformator, ein Kühlgebläse, od. dgl., ohne dass die Konfiguration des Mikroskops wesentlich von der Konfiguration eines Mikroskops ohne Beleuchtungseinrichtung abweicht.

Nach einem weiteren Merkmal der Erfindung ist vorgesehen, dass bei Ausbildung von mehreren Hohlräumen im oder am Tragearm für das Beobachtungssystem die elektrischen und/oder elektronischen Bauteile in einem vom für die Aufnahme des mindestens einen lichtemittierenden Bauteils vorgesehenen Hohlraum separierten Hohlraum angeordnet sind. Diese Konstruktion erbringt den Vorteil, dass die durch den lichtemittierenden Bauteil entstehende Wärme von den elektrischen bzw. elektronischen Bauteilen der elektronischen Stromversorgungsstufe ferngehalten wird, wodurch deren Lebensdauer bzw. Zuverlässigkeit erhöht wird. Weiters kann durch diese Anordnung der Hohlräume der Tragearm volumenmäßig besser ausgenützt werden und dessen Abmessungen klein gehalten werden, was zu einem niederen Gewicht führt.

Um in einfacher Weise die elektrische Verdrahtung der Bauteile bzw. Baustufen und die stabile Lagerung der elektrischen Leitungen sicherzustellen, wird in weiterer Ausgestaltung der Erfindung vorgeschlagen, dass die voneinander separierten Hohlräume über innerhalb des Tragearms für das Beobachtungssystem ausgebildete Kanäle zur Aufnahme von elektrischen Leitungen miteinander verbunden sind.

Zu untersuchende Objekte sind oftmals wärmeempfindlich und daher ist es von Vorteil, wenn nach einem weiteren Merkmal der Erfindung der Hohlraum zur Aufnahme von Wärme entwickelnden Bauteilen, wie eine od. mehrere Hochleistungs-Leuchtdioden, am weitesten entfernt vom Beobachtungssystem vorgesehen ist.

Die Abstrahlung von Wärme kann in weiterer Ausgestaltung der Erfindung auch in einfacher Weise dadurch reduziert werden, dass die Wandungen jedes Hohlraums mit thermischem Isoliermaterial ausgerüstet sind.

Die Erwärmung des Tragearms für das Beobachtungssystem kann in weiterer Ausgestaltung der Erfindung auch dadurch reduziert werden, dass jeder Hohlraum in dem mindestens ein lichtemittierender Bauteil eingebaut ist, mindestens eine Ventilationsöffnung aufweist, die luftdurchlässig und lichtundurchlässig, vorzugsweise durch labyrinthartig versetzte Anordnung von Abdecklamellen innerhalb und/oder über der Ventilationsöffnung, od. dgl., ausgebildet ist.

Ist es erforderlich, jegliche Erwärmung des Objekts bzw. des Tragearms des Beobachtungssystem zu verhindern, so wird nach einem weiteren Kennzeichen der Erfindung vorgeschlagen, in mindestens einem Hohlraum des Tragearms für das Beobachtungssystem ein Peltier-Element zur Reduzierung der Erwärmung der eingebauten elektrischen, elektronischen und lichtemittierenden Bauteile und des Trägers anzuordnen. Hierdurch ist es möglich, Leuchtdioden, die durch Luft-Kühlung bei ca. 40 Grad Celsius betrieben werden, auf zumindest ca. 20 Grad Celsius abzukühlen, was im wesentlichen der üblichen Raumtemperatur eines Laboratoriums entspricht.

In den Zeichnungen sind mehrere Ausführungsformen der Erfindung beispielsweise und schematisch dargestellt. Hierbei zeigen:
- Fig. 1: eine erste Ausführungsform eines Mikroskops mit einem Hohlraum im Tragearm, wobei im Hohlraum eine Leuchtdiode angeordnet ist, die auf einen Lichtleiter ge- richtet ist,
- Fig. 2: eine zweite Ausführungsform eines Mikroskops, wobei in einem Hohlraum des Tragearms eine Leuchtdiode, deren Kühlkörper und eine elektronische Steuerein- richtung angeordnet ist und das Licht über einen Lichtleiter einem faseroptischen Ringlicht zugeführt ist,
- Fig. 3: eine dritte Ausführungsform eines Mikroskops, das mit einem mit mehreren Leuchtdioden aufweisenden Ringlicht ausgerüstet ist,
- Fig. 4: eine Draufsicht auf ein Stereo-Mikroskop dessen Tragearm geschnitten dargestellt ist und drei Hohlräume zur Aufnahme der Beleuchtungseinrichtung aufweist, und
- Fig. 5: einen Teil des Tragearms, teilweise geschnitten, für das Beobachtungs-System, der einen Hohlraum für die Aufnahme des Beleuchtungssystems aufweist, wobei ein mechanisches Steck- und Haltesystem für den Anschluss von Leuchtdioden und Lichtleitern dargestellt ist.

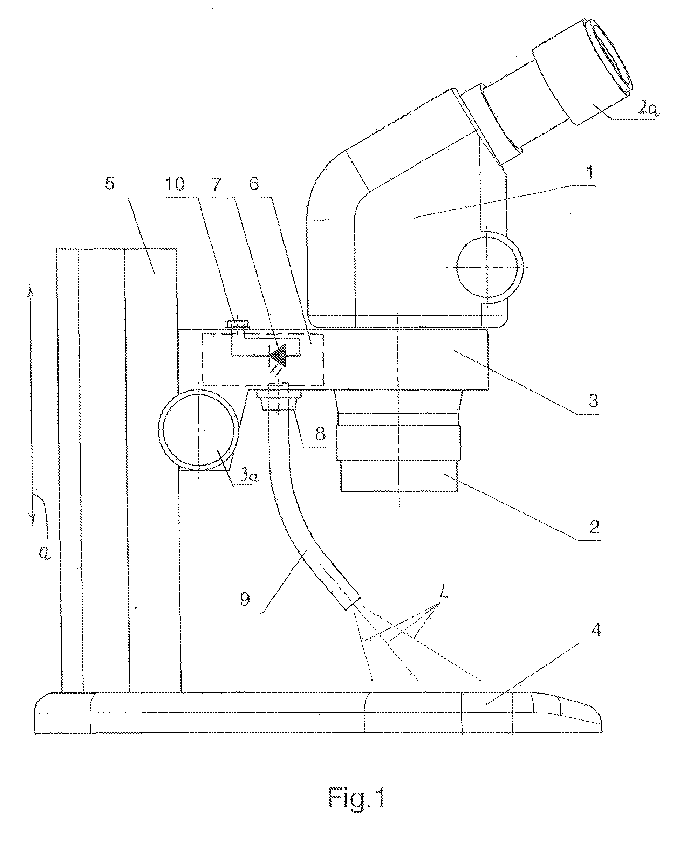

In Fig. 1 ist ein Mikroskop dargestellt, das ein optisches Beobachtungssystem 1 mit einem Objektiv 2 und einem Okular 2a aufweist. Das Beobachtungssystem 1 ist im Tragearm 3 gehalten, der entlang der von der Bodenplatte 4 gehaltenen und vertikalen Mikroskopsäule 5 mit Hilfe eines Einstellknopfes 3a höhenverschiebbar (siehe Pfeil a) angeordnet ist. Auf der Bodenplatte 4 wird im Gesichtsfeld des Objektivs 2 das nicht dargestellte zu untersuchende Objekt positioniert.

Zur Beleuchtung des Objekts ist eine in den Tragearm 3 integrierte elektrische Lichtquelle vorgesehen. Hierzu ist im Träger 3 ein Hohlraum 6 ausgebildet, der zur Aufnahme einer Leuchtdiode 7 oder eines Leuchtdioden-Arrays vorgesehen ist.

Die Wandungen des Hohlraums 6 sind aus lichtdichtem Werkstoff ausgeführt. An der Unterseite des Tragearms 3 ist ein mechanische hohle Steckbuchse 8 vorgesehen, die durch die Wandung des Hohlraums 6 zur lichtemittierenden Fläche der Leuchtdiode 7 gerichtet ist.

Die Steckbuchse 8 ist Teil eines bei diesem Ausführungsbeispiel nicht detailliert dargestellten Steck- und Haltesystems, über das das Lichteintrittsfenster eines kurzen faseroptischen Lichtleiters 9 an die Leuchtdiode 7 gekoppelt wird. Das Lichtaustrittsfenster des Lichtleiters 9 ist auf das nicht dargestellte Objekt gerichtet, auf welches in punktierten Linien angedeutete Lichtstrahlen L fallen. Ein aus flexiblem Material gefertigter Lichtleiter 9 ermöglicht die Ausrichtung seines Lichtaustrittsfensters in verschiedensten Richtungen und aus unterschiedlichen Höhen auf das Objekt.

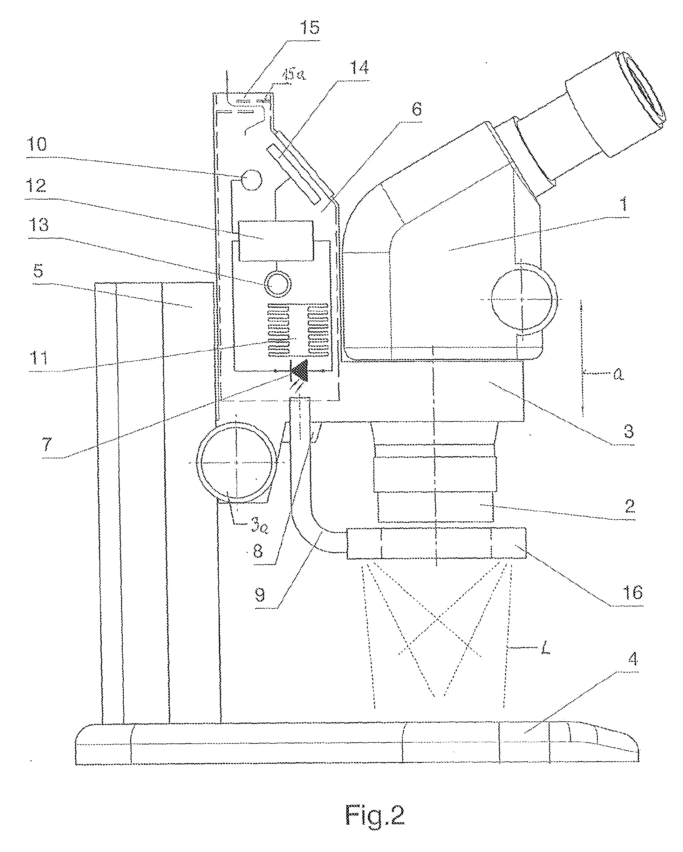

Zur Energieversorgung der Leuchtdiode 7 ist diese mit der Anschlussbuchse 10 elektrisch verbunden. Das Steck- und Haltesystem mit der Steckbuchse 8 für den Lichtleiter 9 und die elektrische Anschlussbuchse 10 sind lichtdicht ausgebildet und somit wird die Abstrahlung von Streulicht aus dem Hohlraum 6 vermieden. Konstruktive Maßnahmen zur Kühlung der Lichtquelle bzw. weiterer elektrischer bzw. elektronischer Bauteile werden anhand der Ausführungsbeispiele gemäß der Fig. 2, 3 und 5 beschrieben.

In den Fig. 2 bis 5 sind mit der Ausführungsform gemäß Fig. 1 übereinstimmende Bauteile mit gleichen Bezugszeichen versehen. Gemäß Fig.2 ist der Hohlraum 6 im Tragearm 3 zwischen dem Beobachtungssystem 1 und der Mikroskopsäule 5 angeordnet. Der Tragearm 3 weist hierbei einen L-förmigen Querschnitt auf und erstreckt sich im wesentlichen über die Höhe des Beobachtungssystems 1. Hierdurch steht ein ausreichend großer Hohlraum 6 zur Verfügung, um alle Bauteile und Baustufen der Beleuchtungseinrichtung in das Mikroskop zu integrieren.

Die Leuchtdiode 7 oder ein Leuchtdioden-Array ist am Kühlkörper 11 montiert. Über das nicht dargestellte Steck- und Haltesystem ist der Lichtleiter 9 an die Leuchtdiode 7 geführt. Der Lichtleiter 9 ist starr ausgebildet und führt das Licht der Leuchtdiode 7 in das faseroptische Ringlicht 16, das um bzw. unterhalb des Objektivs 2 des Beobachtungssystems 1 positioniert ist.

Im Hohlraum 6 ist weiters die Energieversorgungs- und Steuerstufe 12 für die Leuchtdiode 7 angeordnet, die den für den Betrieb der Leuchtdiode 7 erforderlichen Konstantstrom bereitstellt. Über die Handhabe 13 kann der Laborant die Helligkeit der Leuchtdiode 7 einstellen und über das Display 14 die gewählte Helligkeit, Farbtemperatur, etc. kontrollieren. Die Energiezufuhr an die Energieversorgungs- und Steuerstufe 12 erfolgt über die Anschlussbuchse 10.

An der Oberseite des Hohlraums 6 ist ein Luftaustritt 15 angeordnet, der durch labyrinthartig angeordnete Lamellen 15a einen Lichtaustritt unterbindet. Der Hohlraum 6 gemäß Fig.2 kann als lichtdichtes Gehäuse gefertigt sein, das im Fertigungsprozess des Mikroskops während der Endfertigung mit dem Tragearm 3 lichtdicht, beispielsweise durch Verschraubung, oder durch eine händisch lösbare Halteeinrichtung fest verbunden wird und einen einstückigen Bauteil des Mikroskops bildet.

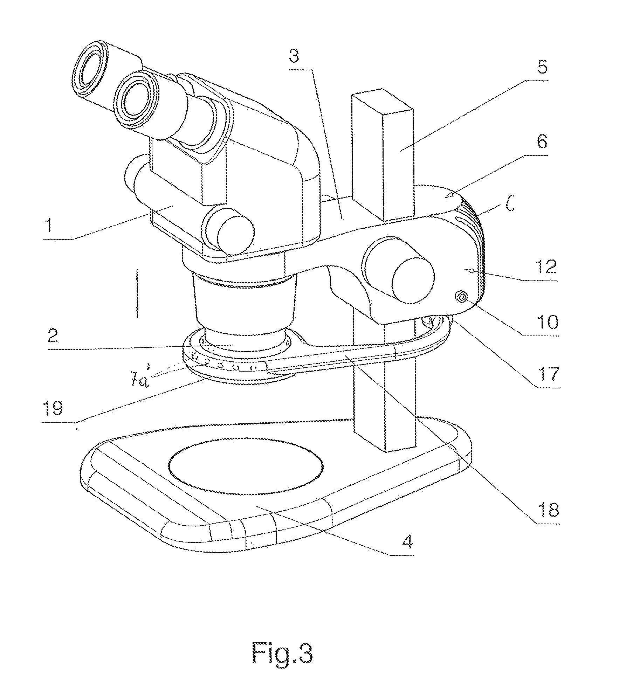

Bei der Ausführungsform gemäß Fig. 3 erstreckt sich der Tragearm 3 im Unterschied zu den Ausführungsformen gemäß der Fig. 1 und 2 bis hinter die die Mikroskopsäule 5. In diesem hinteren Bereich des Tragearms 3 ist der Hohlraum 6 in nicht dargestellter Weise ausgebildet und zur Aufnahme der Energieversorgungs- und Steuerstufe 12 für Leuchtdioden vorgesehen, die in der ringförmigen Halteeinrichtung 19 um das Objektiv 2 angeordnet sind. Diese Stufe 12 versorgt Leuchtdioden 7a' mit Energie, die an der ringförmigen Halteeinrichtung 19 angeordnet sind und so ein LED-Ringlicht bilden. Alternativ werden an den Stellen 7a' die Lichtaustrittsflächen von Lichtleiterfasern angeordnet, welche an Stelle von Versorgungsdrähten von der Stufe 12 im hohlen Tragearm 3 geführt sind.

Die ringförmige Halteeinrichtung 19 wird vom Tragearm 18 gehalten, der über das Steckund Haltesystem 17 an der hinteren unteren Wandung des Tragearms 3 verschwenkbar und lösbar gelagert ist. Eine elektrische Leitung innerhalb des Tragearms 18 verbindet die nicht dargestellten Leuchtdioden an der ringförmigen Halteeinrichtung 19 über das Steckund Haltesystem 17 mit der Energie- und Steuerstufe 12. Der hintere Bereich des Tragearms 3 ist mit Kühlrippen C versehen, um die Wärmeabfuhr vom Hohlraum zu verstärken.

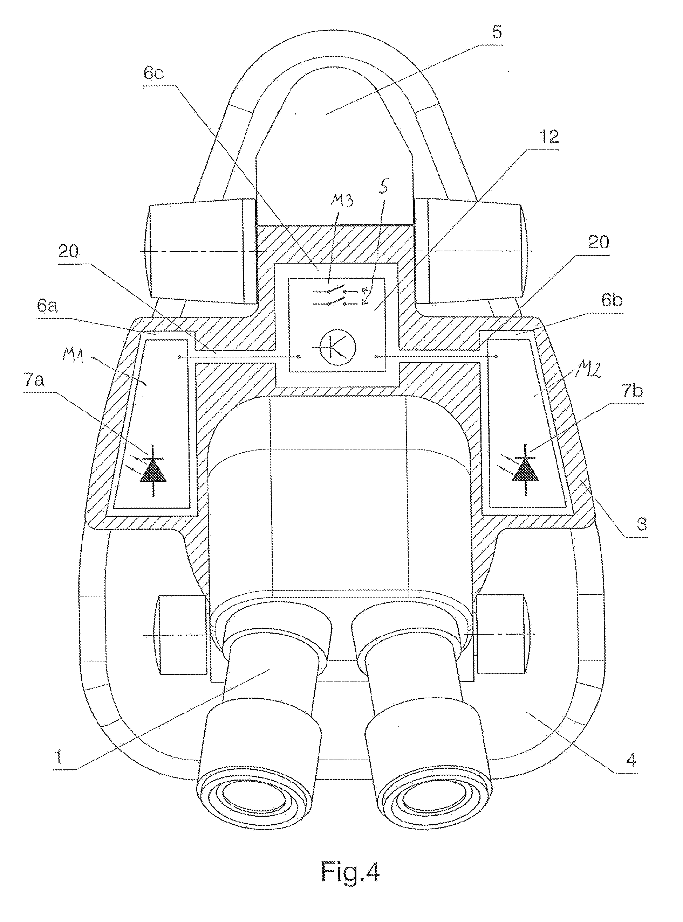

In der Draufsicht gemäß Fig. 4 ist lediglich der Tragearm 3 für das Beobachtungssystem 1 geschnitten dargestellt. Der Tragearm 3 ist derart ausgebildet, dass er sich im Vergleich mit den Ausführungsformen gemäß den Fig. 1 bis 3 beidseitig der Mikroskopsäule 5 erstreckt. Im Tragearm 3 sind drei voneinander separierte Hohlräume 6a, 6b, 6c ausgebildet. Im Hohlraum 6a ist eine Weißlicht emittierende Leuchtdiode 7a od. ein Weißlicht emittierendes Leuchtdioden-Array angeordnet und im Hohlraum 6b eine Farblicht emittierende Leuchtdiode 7b od. ein Farblicht emittierendes Dioden-Array. Die Energieversorgung der Leuchtdioden 7a, 7b erfolgt von der im Hohlraum 6c angeordneten Energieversorgungs- und Steuerstufe 12. Für die elektrischen Leitungen von der Energieversorgungs- und Steuerstufe 12 zu den Hohlräumen 6a und 6b sind im Tragearm 3 Kanäle vorgesehen.

Jeder der mit den Leuchtdioden 7a, 7b ausgerüsteten Hohlräume 6a und 6b ist mit einem nicht dargestellten Steck- und Haltesystem für zum Objekt ausrichtbare Lichtleiter versehen, wie an Hand Fig. 1 beschrieben. Die Energieversorgungs- und Steuerstufe 12 ist mit Schaltern versehen, über die Leuchtdioden 7a, 7b selektiv angesteuert bzw. eingeschalten werden. Für allgemeine Objektuntersuchungen kann Weißlicht gewählt werden, für Fluoreszenz-Untersuchungen kann Farblicht gewählt werden. Als Leuchtdioden 7a, 7b können auch Dioden mit identischer Farbtemperatur gewählt werden, wodurch am Objekt eine Beleuchtung mit größerer Helligkeit oder aus unterschiedlichen Richtungen möglich wird. Um eine größere Variationsmöglichkeit zu schaffen, werden die Komponenten 7a, 7b und 12 zweckmäßig als leicht austauschbare Module M1 bis M3 ausgebildet.

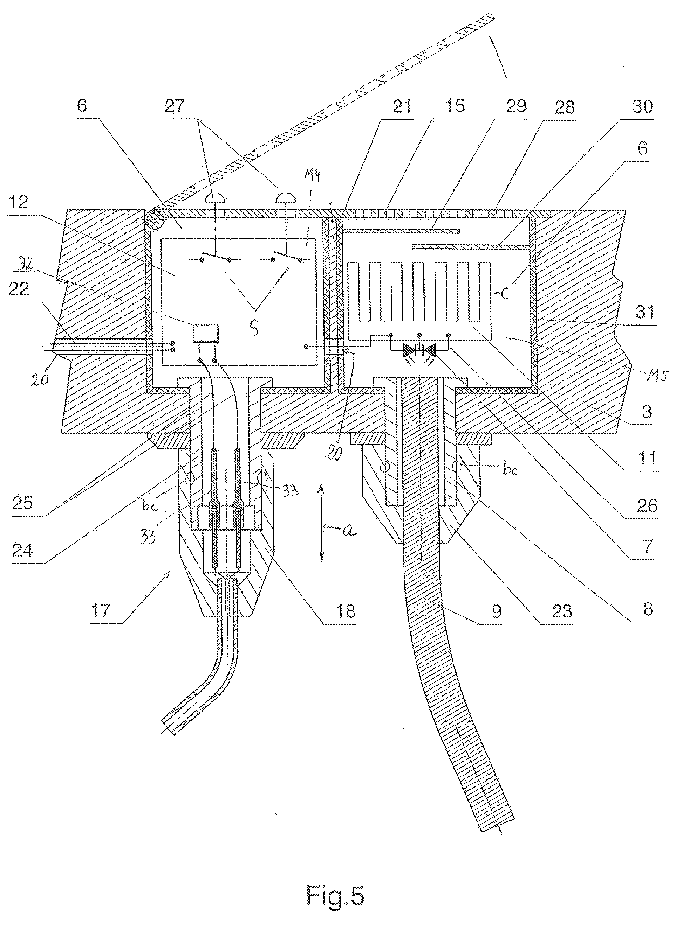

In Fig. 5 ist der Tragearm 3 geschnitten dargestellt, an Hand dessen beschrieben werden soll, wie so ein Austausch von statten gehen kann. Der Hohlraum 6 ist durch eine Trennwand 21 in zwei Kammern geteilt mit einem Kanal 20. In der einen Kammer ist eine Doppel-Leuchtdiode 7 samt Kühlkörper 11 mit Kühlrippen C angeordnet, in der anderen Kammer ist die Energieversorgungs- und Steuerstufe 12 angeordnet. Dieser Energieversorgungs- und Steuerstufe 12 wird Energie über die Leitung 22 zugeführt. Die Leuchtdioden 7 sind über die Leitung 26 an die Energieversorgungs- und Steuerstufe 12 angeschlossen. Mittels der Taster 27 der Energieversorgungs- und Steuerstufe kann der Laborant die Lichtemission der Leuchtdioden 7 einstellen. Ferner kann die Stufe 12 (aber gewünschtenfalls auch die Lichtquelle 7) mit einer Kühleinrichtung versehen werden, die vorteilhaft von mindestens einem Peltier-Element 32 gebildet ist.

Zur Ankoppelung des Lichtleiters 9 für die Objektbeleuchtung direkt zum Objekt oder über ein faseroptisches Ringlicht ist die Steckbuchse 8 ausgerichtet auf die Leuchtdioden 7 in der Wandung des Tragearms 3 vorgesehen. Hiezu ist der Lichtleiter 9 mit einer hülsenförmigen Fassung 23 ausgerüstet, die ein einfaches Aufstecken des Lichtleiters 9 auf die Steckbuchse 8 ermöglicht. Eine Kugelrast bc sichert die Steckverbindung gegen unbeabsichtigtes Abziehen des Lichtleiters, gestattet aber eine Verdrehung der Fassung 23 bzw. des Lichtleiters 9.

Zur mechanischen und elektrischen Ankoppelung bspw. eines mit Leuchtdioden ausgerüsteten Ringlichts oder eines externen Leuchtdioden-Strahlers ist die elektrische Steckbuchse 24 in der Wandung des Tragearms 3 im Bereich der mit der Energieversorgungsund Steuerstufe 12 ausgerüsteten Kammer des Hohlraums 6 vorgesehen. Die elektrischen Kontakte 33 der Steckbuchse 24 sind mit der Energieversorgungs- und Steuerstufe 12 verbunden. An diese Steckbuchse 24 ist der Haltearm 18 des in Fig. 3 dargestellten Leuchtdioden-Ringlichts 19 angesteckt.

Auch diese Halte- und Steckverbindung 18, 24 weist eine Kugelrast bc auf, die ein unbeabsichtigtes Abziehen des Tragearms 18 unterbindet. Anstelle des Haltearms 18 kann auch der Stecker einer elektrischen Leitung eines vom Mikroskop separierten Leuchtdioden-Strahlers an die Steckbuchse 24 angeschlossen werden.

Der Hohlraum 6 ist an seiner Oberseite durch eine drehbare Klappe 28 verschlossen. Diese Klappe 28 weist Durchbrechungen zur Abfuhr der von den Leuchtdioden 7 entwickelten Wärme auf. Um aber einen Austritt von Licht durch die Durchbrechungen zu vermeiden, sind im Hohlraum 6 oberhalb der Leuchtdioden 7 labyrinthartig versetzte lichtundurchlässige Lamellen 29, 30 angeordnet, die lediglich den Austritt von Luft ermöglichen. Eine derartig ausgebildeter lichtundurchlässiger Luftdurchtritt kann auch in nicht dargestellter Weise in der Unterseite des Hohlraums 6 vorgesehen werden, um eine effiziente Zuführung von Kühlluft sicherzustellen.

Die Auskleidung der Innenwandung des oder der Hohlräume 6, 6a, 6b, 6c mit thermischem Isoliermaterial 31 reduziert die Erwärmung des Tragearms 3.

Die Integration der Beleuchtungseinrichtung in den Tragearm 3 für das Beobachtungssystem 1 ist vor allem für die Auflichtbeleuchtung von Objekten geeignet, die mittels Stereomikroskopen untersucht werden. Die in einem oder mehreren Hohlräumen 6, 6a, 6b, 6c angeordneten Bauteile können zu, vorzugsweise aus einem einzigen Teil bestehenden, Modulen M4, M5 zusammengefasst werden, die auch durch den Laboranten werkzeuglos ausgetauscht werden können. Nicht dargestellte Führungseinrichtungen für derartige Module ermöglichen eine justagefreie Ausrichtung der Leuchtdioden 7, 7a, 7b auf das Eintrittsfenster angekoppelter Lichtleiter 9.

Die Erfindung ist auf die beschriebenen Ausführungsbeispiele nicht beschränkt.

## Patentansprüche

1. Mikroskop mit einer Mikroskopbasis, einer Mikroskopsäule, einem an der Mikroskopsäule in unterschiedlicher Höhe über der Mikroskopbasis positionierbarem Tragearm für ein optisches oder optronisches Beobachtungssystem und mit einer am Mikroskop angeordneten elektrischen Beleuchtungseinrichtung für ein Objekt, **dadurch gekennzeichnet, dass** der Tragearm (3) für das Beobachtungssystem (1) mindestens einen durch lichtdichte Wandungen gebildeten Hohlraum (6, 6a, 6b, 6c) aufweist, der zwischen dem Beobachtungssystem (1) und der Mikroskopsäule (5) und/oder an der vom Beobachtungssystem (1) abgewandten Seite hinter der Mikroskopsäule (5) und/oder seitlich der Mikroskopsäule (5) angeordnet ist und in diesem mindesten einen Hohlraum (6, 6a, 6b, 6c) elektrische und/oder elektronische Bauteile (12) und/oder lichtemittierende Bauteile (7, 7a, 7b) der Beleuchtungseinrichtung eingebaut sind, wobei an dem Tragearm (3) für das Beobachtungssystem (1) ein mechanisches Steck- und Haltesystem (8, 18, 23, 24) für den elektrischen Anschluss mindestens einer außerhalb des Tragearms anordbaren und auf das zu beobachtende Objekt richtbaren Lichtquelle (19), wie mindestens eine Leuchtdiode und/oder für mindestens einen, vorzugsweise flexiblen zum Objekt ausrichtbaren Lichtleiter (9), dessen Lichteintrittsfläche über das mechanische Steck- und Haltesystem (8, 18, 23, 24,) auf mindestens eine innerhalb des Hohlraums (6, 6a, 6b, 6c) angeordnete Leuchtdiode (7, 7a, 7b) ausgerichtet ist.

2. Mikroskop nach Anspruch 1, **dadurch gekennzeichnet, dass** die im Hohlraum des Tragearms (3) angeordneten elektrischen und/oder elektronischen und/oder lichtemittierenden Bauteile (12, 7, 7a, 7b) der Beleuchtungseinrichtung als, vorzugsweise einstückig ausgebildetes, Modul ausgebildet sind, das, vorzugsweise, über eine verschließbare Öffnung im Tragearm (3), insbesondere über einen schwenkbaren Deckel oder eine verschiebbare Klappe (28), austauschbar ausgebildet ist.

3. Mikroskop nach Anspruch 1 oder 2, **dadurch gekennzeichnet, dass** der Tragearm (3) aus mehreren Bauteilen zusammengesetzt ist, wobei ein Bauteil als lichtdichtes den Hohlraum (6) bildendes Gehäuse ausgebildet ist, und diese den Tragearm (3) bildenden Bauteile durch eine, vorzugsweise händisch, lösbare Halteeinrichtung miteinander verbunden sind.

4. Mikroskop nach einem der vorhergehenden Ansprüche, **dadurch gekennzeichnet, dass** bei Ausbildung von mehreren Hohlräumen (6a, 6b, 6c) im Tragearm (3) für das Beobachtungssystem (1) die elektrischen und/oder elektronischen Bauteile (12) in einem vom für die Aufnahme des mindestens einen lichtemittierenden Bauteils (7a,7b) vorgesehenen Hohlraum (6a,6b) separierten Hohlraum (6c) angeordnet sind.

5. Mikroskop nach Anspruch 4, **dadurch gekennzeichnet, dass** die voneinander separierten Hohlräume (6a,6b,6c) über innerhalb des Tragearms (3) für das Beobachtungssystem (1) ausgebildete Kanäle (20) zur Aufnahme von elektrischen Leitungen miteinander verbunden sind.

6. Mikroskop nach Anspruch 4 oder 5, **dadurch gekennzeichnet, dass** der Hohlraum (6a, 6b) zur Aufnahme von Wärme entwickelnden Bauteilen, wie eine oder mehrere Hochleistungs-Leuchtdioden (7a, 7b), am weitesten entfernt vom Beobachtungssystem (1) vorgesehen ist.

7. Mikroskop nach einem der vorhergehenden Ansprüche, **dadurch gekennzeichnet, dass** die Wandungen jedes Hohlraums (6,6a,6b,6c) mit thermischem Isoliermaterial (31) ausgerüstet sind.

8. Mikroskop nach mindestens einem der vorhergehenden Ansprüche, **dadurch gekennzeichnet, dass** jeder Hohlraum (6) in dem mindestens ein lichtemittierender Bauteil (7) eingebaut ist, mindestens eine Ventilationsöffnung (15) aufweist, die luftdurchlässig und lichtundurchlässig, vorzugsweise durch labyrinthartig versetzte Anordnung von Abdecklamellen (29,30) unterhalb und/oder über der Ventilations-öffnung (15), od. dgl, ausgebildet ist.

9. Mikroskop nach mindestens einem der vorhergehenden Ansprüche, **dadurch gekennzeichnet, dass** in mindestens einem Hohlraum (6, 6a, 6b, 6c) des Tragearms (3) für das Beobachtungssystem (1) ein Peltier-Element zur Reduzierung der Erwärmung der eingebauten elektrischen, elektronischen und lichtemittierenden Bauteile (12, 7, 7a, 7b)und des Tragearms (3) angeordnet ist.
